# EUROPEAN PATENT APPLICATION

(11) **EP 2 402 095 A1**
(43) Date of publication of application: **04.01.2012**
(21) Application number: 10460030.9
(22) Date of filing: 01.07.2010
(51) Int. Cl.: B21J 15/04, B21J 15/38, B25B 27/00, F16B 1/00, F16B 19/10, F16B 37/06

(54) **Universal blind rivet and threaded rivet nut setting system**

(71) Applicant: BURY Sp. z o.o., 39-300 Mielec (PL)
(72) Inventor: Palczak, Maciej, 35-507 Rzeszow (PL)
(74) Representative: Kaminski, Zbigniew

(57) **Abstract**

A universal blind rivet and threaded rivet nut setting system comprising a blind rivet setting tool provided with a mechanically- or electrically- driven pulling element, on the end of which there is a holder adapted to hold and pull the rear end of the blind rivet mandrel, and with a sleeve that is adapted to guide the rivet mandrel and is mounted within the head of the rivet tool before the holder, characterized in that it is provided with an additional mandrel (1), adapted to be mounted coaxially with the pulling element (14) of the riveting tool and which comprises a rear catching portion (2) adapted to be held and pulled by said holder and a front threaded portion (3) adapted to receive a threaded rivet nut (5).

## Description

This invention relates to a universal riveting tool, which can be used for riveting by means of both blind rivets and rivet nuts with expanding strips, provided with a mechanically- or electrically-driven pulling element, on the end of which there is a holder adapted to hold the end of the rivet mandrel, and with a sleeve that is adapted to guide the rivet mandrel and is mounted within the head of the rivet tool before the holder.

In the recent years expanding rivets have been increasingly used to fix small electronic devices, especially two types of such rivets are the most common: blind rivets and rivet nuts with expanding strips. The blind rivets consist of a mandrel and a sleeve, which is blind at one end, connected to the mandrel, provided with grooves parallel to its axis and with an expanded foot in its bottom part. Pulling the mandrel when the sleeve foot is fixed make the sleeve walls expand thus pressing and fixing the elements between the expanded sleeve foot and its head.

A rivet nut is composed of a flat base connected by means of a number of strips. The riveting operation consists in driving a screw into the nut and the hole in the base and rotating it towards the base. This operation deforms the strips. The decreasing distance between the nut and the base makes the strips deform and press the riveted elements down to the base.

The European patent EP 0108835A1 discloses a riveting tool designed only for blind rivets and provided with a tubular pulling element triggered by one part of the tool handle, mounted pivotally, the said tubular element being provided, on its end, with a three-tooth catch to hold the rivet mandrel. The mandrel is driven through the guiding sleeve, which is located within the tool body below the three-tooth catch.

The US patent US 2559 281 discloses a rivet nut applicable to mount a sleeve permanently in a wall of any element.

The British patent GB 2172233A discloses a hand-operated lever-type rivet tool with two pivotal handles with a pulling element, which ends up with a threaded mandrel, adapted to be driven into the rivet nut, the upper portion of the said pulling element is provided with a notch, which is used to screw the threaded mandrel out from the nut once it is clamped on the parts being riveted.

The US patent US 5437085 discloses two different types of riveting tools. The first one, adapted to perform riveting operations on blind rivets, is provided with a toothed catch connected to a cam-lever drive and adapted to hold the mandrel of the blind rivet. The other type is adapted to perform riveting by means of rivet nuts and is provided with a projecting threaded mandrel, which is guided within the casing and connected with a pulling element, which is driven in the same way as in the first type of the riveting tool. The threaded tip of the mandrel is driven into the rivet nut and causes the strips expand by squeezing the nut.

The European patent EP 1435463A1 discloses an advanced rivet nut provided with expanding strips and a base of various shapes. The present invention also relates to a riveting operation performed by means of such rivet nuts, which consists in using a rivet tool provided with a threaded mandrel driven into the nut and a pulling element, mounted within the mandrel and moved by means of a lever formed by the riveting tool handles. When the mandrel is rotated, the nut is prevented from rotation by means of a key mounted on a shaped, e.g. a squared base.

A major inconvenience of all these solutions known in the state of the art is the necessity of using various designs of the riveting tools for blind rivets and for rivet nuts.

This is an object of this invention to provide a universal riveting tool, which is adapted to perform riveting operation by means of both the blind rivets and the rivet nuts.

According to the invention there is provided a universal riveting tool, characterized in that it is provided with an additional mandrel, which is coaxial with the pulling element and which consists of a catching portion, mounted in a known rivet tool handle, and of a threaded portion, driven into the rivet nut.

The mandrel is also favourably provided with a neck element, which is located at the beginning of the threaded portion and is adapted to limit the depth, at which the threaded portion is driven into the rivet nut.

The mandrel is also favourably provided with a notch, which is adapted to accommodate a screw-driver to screw the mandrel out from the nut, or with a shaped head, which is adapted to accommodate a key.

The catching portion of the mandrel is also favourably provided, in its circumference, with marks corresponding to various lengths of rivet nuts.

Thanks to using the mandrel the riveting tool, according to the invention, may be applied to both the blind rivets - without using the mandrel - and to the rivet nuts if the catching portion of the mandrel is mounted in the known holder of the riveting tool.

The riveting tool, according to the invention, is depicted in one of its embodiments on the drawings where Fig. 1 - is a cross-section view of the riveting tool (a blind-rivet mode) along the axis of the pulling element, Fig. 2 - is a view of the same riveting tool provided with a mandrel mounted in the tool holder, Fig. 3 - is a side view of the mandrel for rivet nuts, Fig. 4 - is a side view of an embodiment of the mandrel with a neck portion, Fig. 5 - is a side view of an embodiment of the mandrel with marks corresponding to various nut lengths.

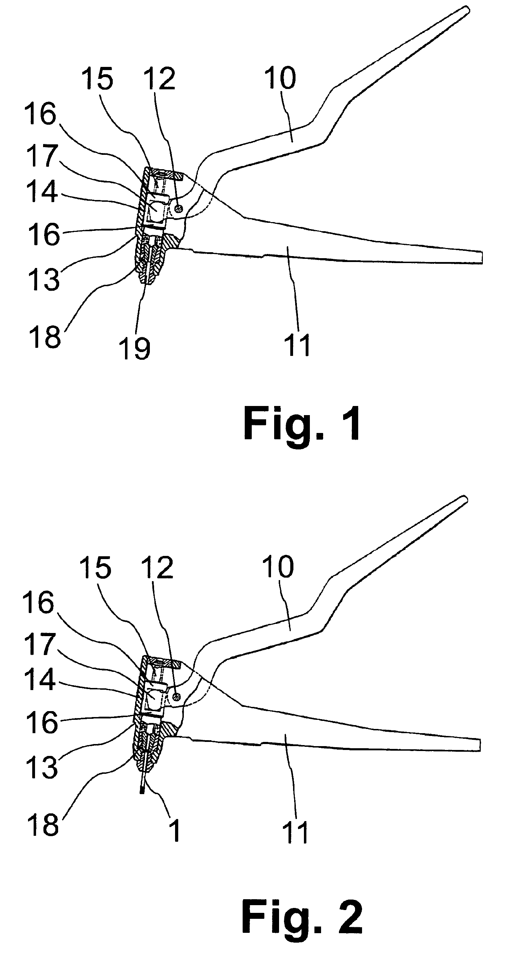

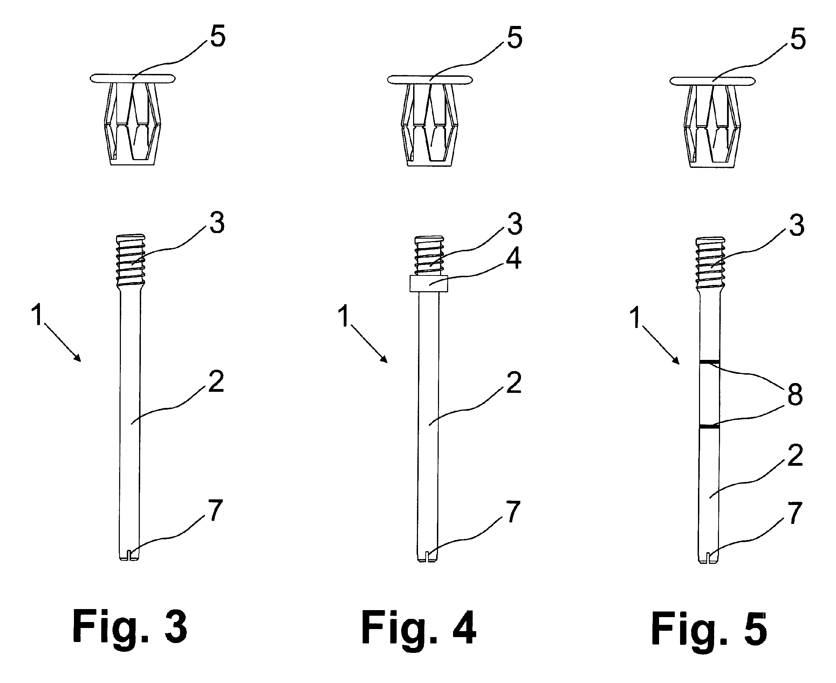

The riveting tool, as depicted in one of its embodiments in the Figs. 1 and 2, consists of two handles 10 and 11, connected pivotally by means of a pivot 12. In the front portion of the second handle 11 there is a head 13 with a pulling element 14, which has a form of a sleeve mounted slideably on a guiding shaft 15 and provided internally with limit surfaces 16 that are adapted to engage with a ball-shaped pivot 17 connected with the first handle 10. The pulling element 14 is connected with a holder 18, which is adapted to hold the mandrel of a known blind rivet or a catching portion 2 of an additional mandrel (Figs. 3-5).

Both the rivet mandrel and an additional mandrel 1 are guided along the axis of the pulling element 14 by means of a guide 19 mounted within the head 13 under the holder.

The riveting tool, according to the invention, operates as follows:
In case of using known blind rivets the mandrel of the rivet is driven into and mounted in the holder 18. Next, the end of the rivet that protrudes from the riveting tool is placed into the hole made in the riveted elements and two handles 10 and 11 of the riveting tool are pressed against each other. Rotating the first handle 10 with the ball-shaped pivot 17 results in an upward movement of the pulling element 14. The holder 18 is clamped and the mandrel of the rivet moves in the same direction and presses the surrounding sleeve thus deforming its strips and pressing them down to the riveted elements.
In case of using the rivet nuts 5, first the catching portion 2 of the mandrel 1 is placed in the aligning holder 18 and then the threaded portion 3 is driven into a rivet nut 5. The end of the rivet that protrudes from the riveting tool is placed into the hole in the riveted elements or into a hole in a wall (e.g. a dashboard of a vehicle) and both handles 10 and 11 of the riveting tool are pressed together. Rotating the first handle 10 with the ball-shaped pivot 17 results in an upward movement of the pulling element 14 with a mandrel 1 mounted in its holder 18. This results in an upward movement of the rivet nut 5 and a deformation of the strips, which are pressed down to the surface of the riveted elements or, respectively, in tightening the rivet nut to the wall. Once the rivet nut is tightened, a screwdriver is placed in a notch 7 on the mandrel 1 in order to screw the mandrel out from the rivet nut and, thus, to reuse it. A shaped head, adapted to accommodate a key, may also be used instead of the notch 7.

In other embodiment the mandrel 1 is also provided with a neck element 4, which limits the depth, at which the threaded portion may be driven into the rivet nut 5.

The catching portion 2 of the mandrel 1 may be also provided, in its circumference, with marks 8 corresponding to various lengths of the rivet nuts used.

A fastening bolt, e.g. a hook, may be driven into the nut.

The invention is not limited to the embodiments presented above but includes also any modifications thereof provided that these modifications are consistent with the idea of this invention, especially those modifications, which aim at adapting these embodiments to particular elements to be riveted or to the nuts in the walls.

## Claims

1. A universal riveting tool provided with a mechanically- or electrically-driven pulling element, on the end of which there is a holder adapted to hold the end of the rivet mandrel, and with a sleeve that is adapted to guide the rivet mandrel and is mounted within the head of the rivet tool before the holder, **characterized in that** it is provided with an additional mandrel (1), which is coaxial with the pulling element (14) of the riveting tool and which consists of a catching portion (2), mounted in a known rivet tool handle, and of a threaded portion (3), driven into the thread of the rivet nut (5)

2. The riveting tool, according to the Claim 1, **characterized in that** its mandrel (1) is also provided with a neck element (4), which is located at the beginning of the threaded portion and is adapted to limit the depth, at which the threaded portion is driven into the rivet nut.

3. The riveting tool, according to the Claim 1, **characterized in that** its mandrel (1) is also provided with a notch (7), which is adapted to accommodate a screw-driver to screw the mandrel out from the nut, or with a shaped head, which is adapted to accommodate a key.

4. The riveting tool, according to the Claim 1, **characterized in that** its mandrel (1) is also provided with a shaped head, which is adapted to accommodate a key.

5. The riveting tool, according to the Claim 1, **characterized in that** the catching portion (2) of the mandrel (1) is also provided, in its circumference, with marks (8) corresponding to various lengths of rivet nuts.

## Amended claims

### Amended claims in accordance with Rule 137(2) EPC.

**1.** A universal blind rivet and threaded rivet nut setting tool provided with a mechanically driven pulling element (**14**), on the end of which there is a holder (**18**) adapted to hold and pull the rear end of a blind rivet mandrel, and with a sleeve that is adapted to guide the rivet mandrel and is mounted within a head (**13**) of the rivet setting tool before the holder (**18**), **characterized in that** the rivet setting tool being adapted for blind rivets is further adapted for rivet nuts by an additional mandrel (**1**) adapted to be mounted coaxially with the pulling element (**14**) of the rivet setting tool and which comprises a rear catching portion (**2**) adapted to be hold and pulled by the holder (**18**) and a front threaded portion (**3**) adapted to receive a threaded rivet nut (**5**).

**2.** The universal blind rivet and threaded rivet nut setting tool according to the Claim 1, **characterized in that** its mandrel (**1**) is also provided with a neck element (**4**), which is located at the beginning of the threaded portion (**3**) and is adapted to limit the depth, at which the threaded portion (**3**) is driven into the rivet nut (**5**).

**3.** The universal blind rivet and threaded rivet nut setting tool according to the Claim 1, **characterized in that** its mandrel (**1**) is also provided with a notch (**7**), which is adapted to accommodate a screwdriver to screw the mandrel out from the rivet nut (**5**).

**4.** The universal blind rivet and threaded rivet nut setting tool according to the Claim 1, **characterized in that** its mandrel (**1**) is also provided with a shaped head, which is adapted to accommodate a key.

**5.** The universal blind rivet and threaded rivet nut setting tool according to the Claim 1, **characterized in that** the catching portion (**2**) of the mandrel (**1**) is also provided, in its circumference, with marks (**8**) corresponding to various lengths of rivet nuts (**5**).
